# EUROPEAN PATENT SPECIFICATION

(11) **EP 2 476 941 B1**
(45) Date of publication and mention of the grant of the patent: **27.03.2013**
(21) Application number: 11425004.6
(22) Date of filing: 13.01.2011
(51) Int. Cl.: F16L 37/56

(54) **A multi-connected device for simultaneously connecting several hydraulic or electric lines**
Mehrfach angeschlossene Vorrichtung zum gleichzeitigen Anschließen mehrerer Hydraulik- oder Stromleitungen
Dispositif à multi-connexions pour connecter simultanément plusieurs circuits hydrauliques ou électriques

(43) Date of publication of application: 18.07.2012
(73) Proprietor: Faster S.P.A., 20124 Milano (IT)
(72) Inventor: Danelli, Alessandro, 24053 Brignano Gera d'Adda (IT); Rusconi, Paolo, 26027 Rivolta d'Adda (IT)
(74) Representative: Lualdi, Lorenzo

(56) References cited:
- US-A- 2 309 890
- US-A1- 2005 184 510

## Description

The present invention relates to a device for simultaneously connecting several hydraulic or electric lines.

Multi-connection devices are known on the market for some time, which allow a plurality of hydraulic or electric lines to be simultaneously connected by essentially taking advantage of the principle of leverage in order to reduce the connecting efforts which, in the case of several lines or in the case of residual pressures in the system when hydraulic lines are involved, are significant at times.

The multi-connection systems discussed indeed always consist of at least a fixed part which generally supports a plurality of female couplings, and of a movable part which generally supports a corresponding number of male couplings. The operating principle of the multi-connection devices of known type therefore provides taking advantage of a lever for reducing the efforts required to near the movable part to the fixed part, thus obtaining the simultaneous connection of the couplings.

Moreover, the systems or devices of known type such as that of US 2005/0184510 A, have pins or hooking pins adapted to keep the coupling stable once the connection has been made, and this involves increasing the overall sizes of the multi-connections of known type and complicates the structure thereof. A drawback of the multi-connection systems of known type therefore resides in the volume and the increased level of complication of the devices which increase the production costs thereof and restrict the reliability thereof.

Moreover, a further drawback of the multi-connection systems of known type consists of the need to have to provide centring pins to be certain that the connection between the movable part and the fixed part is made according to the correct direction.

Solutions are also known on the market which provide the hooking system to be partially integrated within the centring pins, which simplifies the project of the device thus obtaining an advantage with respect to the systems hereto described. However, these latter devices which provide integrating the hooking system within the centring pins in any event also have the drawback of producing certain volumes such to create assembly or positioning difficulties of the couplings within the support parts.

Hence it is the primary task of the prevent invention to resolve the drawbacks detailed hereto and others which afflict the multi-connection devices of type known from the state of the art.

In particular, it is the subject of the present invention within said task to provide a device for simultaneously connecting a plurality of hydraulic or electric lines which has a simplified structure and hence increased production simplicity with respect to the systems known from the state of the art.

Again more specifically, it is the subject of the present invention to provide a device for instantly connecting a plurality of lines which does not require an additional hooking system to make the connection of the lines stable once the coupling has been made.

It is therefore also the subject of the present invention to provide a multi-connection device comprising a simplified coupling, centring and hooking system, thus obtaining a significant decrease of the general volumes of the device and also an increased affordability and reliability thereof.

Not lastly, it is the subject of the present invention to provide a multi-connection device without protruding parts which may interfere with the operation of the machine or of the apparatus on which said device is mounted. One of the main scopes of use of the multi-connection devices of the type the subject of the present invention is indeed the one on movable mechanical arms, for example of ground-moving machines or the like, and thus the conformation of the device should prevent protruding parts which may hinder the movement of the mechanical body it is connected to.

This task and these and other objects which shall become more apparent hereinafter are achieved by a device for simultaneously connecting several hydraulic or electric lines, according to the claims in the appended claims.

Further features and advantages of the present invention will become more apparent from the following detailed description, provided by way of non-limiting example and illustrated in the accompanying drawings, in which:
figure 1 shows a comprehensive perspective view of fixed part A of the multi-connection device according to a first embodiment of the present invention;
figure 2 shows a perspective view of movable part B of the multi-connection device according to a first embodiment of the present invention;
figure 3A shows a side view of fixed part A of the multi-connection device according to a first embodiment of the present invention;
figure 3B shows a section view according to the vertical plane A-A shown in figure 3A;
figure 4A shows a bottom view of the movable part B in figure 2;
figure 4B shows a side view of the movable part B in figure 4A;
figure 5A shows a sectional side view with a median vertical plane xz of the multi-coupling connection according to the present invention, in open configuration of the connection;
figure 5B shows the same sectional side view in figure 5A of the multi-coupling connection according to the present invention, in closed configuration of the connection;
figure 5C shows the enlarged detail of the peculiarity shown in the circle D in figure 5B;
figure 6 shows a perspective view of the movable part according to a second embodiment of the multi-connection device according to the present invention;
figure 7 shows a comprehensive view of the multi-connection device according to a second embodiment of the present invention;
figure 8 shows a complete side view of the multi-connection device in figure 7;

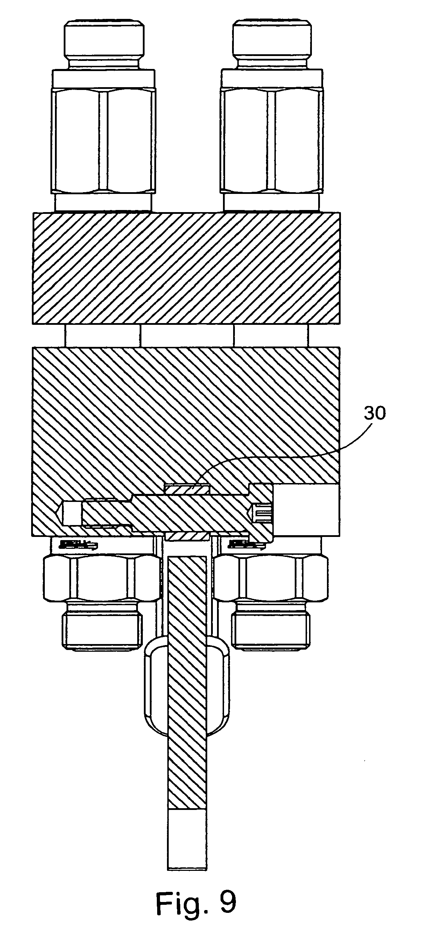

figure 9 shows a section view according to the plane E-E shown in figure 8.

According to a preferred embodiment of the present invention illustrated in the mentioned figures by way of non-limiting example, the multi-connection device according to the present invention comprises a fixed part **A** and a movable part **B.**

The fixed part **A** comprises a plate-like element **1** which supports a plurality of first couplings, here in the example in the figures, female couplings **2a, 2b, 2c, 2d.** Preferably said plate-like element has a quadrangular shape, as in the embodiment shown in the figures, and said female couplings are stably inserted into said plate element **1,** preferably by means of a threaded connection.

At least a housing is also provided in the fixed plate **1** in which a hooking pin **3** may axially slide for hooking the movable part **B** and consequently closing the connection of the couplings. Again with reference to the embodiment shown by way of example, two housings are preferably provided in the fixed plate so that two hooking pins **3** may be provided. Said hooking pins are on-axis to each other, as better explained hereinafter.

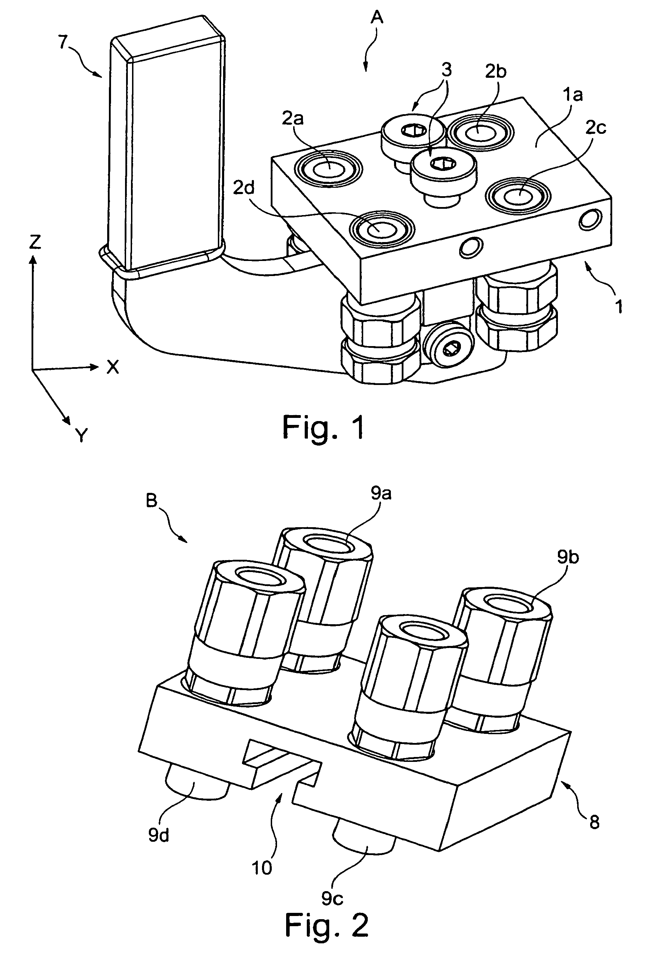

In particular, figure 1 shows the Cartesian reference **x, y, z** and with respect to such a Cartesian reference, the plate **1** has a longitudinal development along the direction x and a transversal development along the direction **y.**

Therefore the plate has a top face **1a** which is contained in a plane **x,y** while the hooking pins **3** and the female couplings **2a, 2b, 2c, 2d** are inserted into said plate essentially perpendicularly to the surface **1a,** hence along the orthogonal direction **z.**

Again in more detail, the hooking pins **3** orthogonally protrude from the surface **1a** in direction **z,** while the faces of said female couplings **2a, 2b, 2c** and **2d** do not protrude from the surface **1a** and also remain contained in the plane **x, y** defined by such a surface, as shown in the figure.

Again, the hooking pins **3** are aligned with each other along the same transversal direction **y,** and are advantageously arranged at the middle zone of the plate **1,** essentially in equidistant position from the female couplings **2a, 2b, 2c** and **2d** and equidistant from the edges of the plate, so that the plate itself has a double longitudinal and transversal axial symmetry.

As mentioned, the hooking pins **3** are axially movable within the specific housings obtained in the fixed plate **1,** the top end protruding from the surface **1a** of the plate **1** and the bottom end being restrained, preferably by means of threaded connection, to restraining elements **4,** preferably shaped as blocks, which have a through hole in transversal direction **y** into which a blocking means **5** is conveniently inserted, preferably consisting of a threaded pin **5** blocked in position by a nut **6.**

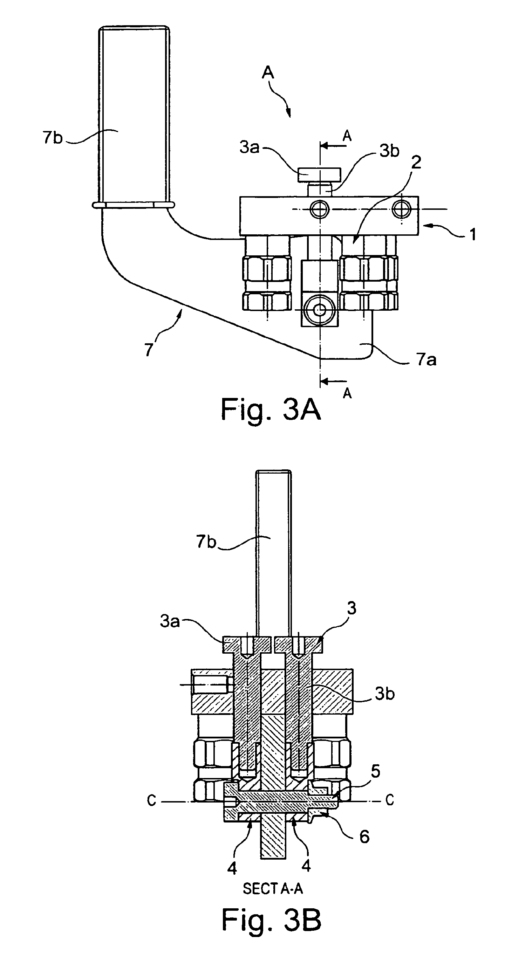

Said elements or restraining blocks **4** are also aligned on a same single transversal axis **y,** and are separated from each other, as shown in particular in the section of figure 3B. A lever 7 is inserted between said restraining blocks **4,** which is hinged on the pin **5,** whose longitudinal axis C therefore coincides with the rotation axis of said lever **7.**

Said lever **7** has an eccentric profile in the hinging zone, with respect to the rotation axis **C,** such that the eccentric shape of the outer profile of the lever, which comes in contact with the bottom surface of the fixed plate **1,** determines a related movement of the hooking pins **3** with respect to the plate **1.** In greater detail, since the lever **7** is hinged on the same pin **5** which restrains the restraining blocks **4** of the hooking pins **3,** the eccentricity of the profile of the lever **7** at the hinging end **7a** thereof determines the translating axial movement of the pins **3** with respect to the plate **1,** which we point out is generally fixed to the vehicle or to the apparatus to which it is connected.

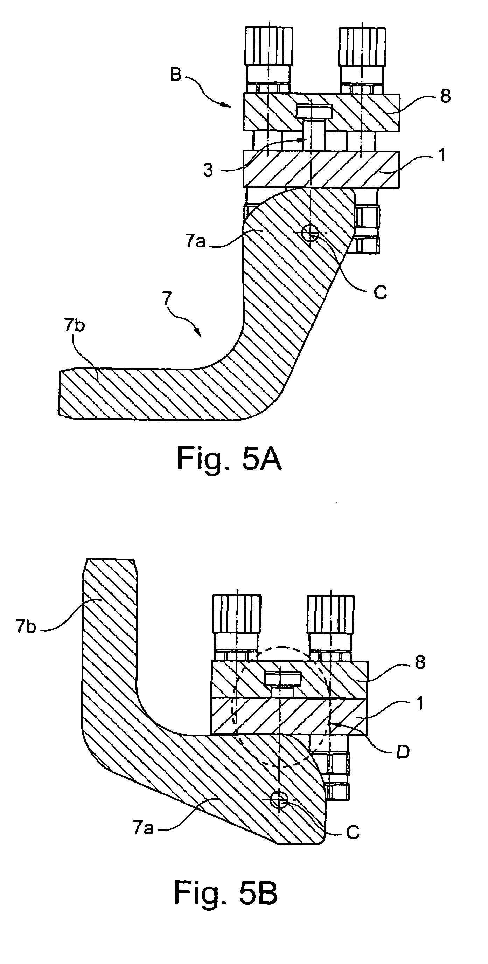

The command lever **7** is therefore movable between a first position shown in figure 5A in which the hooking pins **3** protrude for a sizeable portion of the length thereof from the top surface **1a** of said plate **1,** this position corresponding to an open position of the connections, i.e. of releasing of the movable part **B** of the connection, as better disclosed hereinafter, and a second position shown in figure 5B in which only the top end, opposite to the bottom end inserted into said restraining blocks **4,** of the hooking pins **3** protrudes from the top surface **1a** of said plate **1.** This second position of the lever **7** corresponds to a closed condition of the connection.

In order to completely comprehend how the rotation of the eccentric lever **7** and the consequential axial translation of the hooking pins **3** determine the closing of the connection, the movable part **B** is now described of the multi-connection device at hand.

The movable part **B** comprises a plate-like element **8** which supports a plurality of second couplings, here in the example herein shown, male couplings **9a, 9b, 9c, 9d.** Preferably said plate-like element has a quadrangular shape, as in the embodiment shown in the figures, and similar to that shown for the fixed plate **1,** and said male couplings are stably inserted into said plate element **8,** preferably by means of a threaded connection.

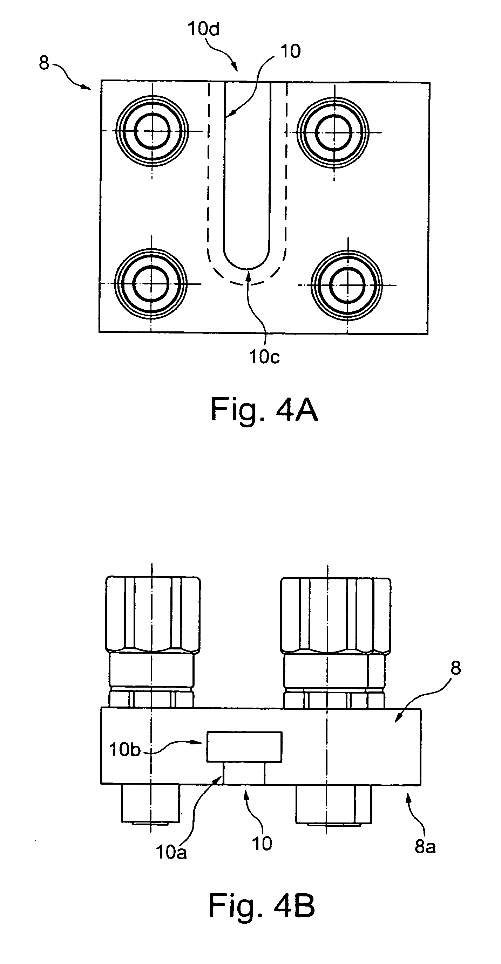

As shown in figure 4B, the part of the male couplings **9a, 9b, 9c, 9d** intended to be engaged in the corresponding female couplings **2a, 2b, 2c, 2d** protrudes from the bottom surface **8a** of the plate **8.** Moreover, again according to that shown in figures 4A and 4B, the plate **8** has at least a guide groove **10** which opens toward the bottom surface **8a** of the plate itself and which consists of part of the centring and hooking means together with the pins **3.**

In particular, it is noted in figure 4A how said groove **10** which is open toward the bottom surface **8a** of the plate, has a shorter length with respect to the plate itself, and thus has a bottom surface **10c,** shown with joined shape in the mentioned figures. Again, it is noted in figure 4A how said groove **10** is T-shaped, i.e. has a part **10b** more within the plate, while the top part of the groove, noting the plate from the perspective in figure 4B, has a longer length with respect to the bottom part **10a** which opens on the inner surface **8a.**

According to that hereto shown in the accompanying figures, it is therefore comprehended that said movable plate **8** has at least a groove **10** which opens on the bottom surface **8a** of the plate itself and is conveniently shaped complementary to the hooking means, consisting in the example shown, of the hooking pins **3,** so that said hooking means may be slidingly inserted into said groove **10** until reaching the end **10c** of the groove, end which therefore consists of an end-of-travel position for inserting the pins, and may stably hold said plate **8** in direction **z.** The hooking pins **3** are indeed conveniently shaped so as to touch the inner portion of said groove. According to the example shown in the figures the pins have an essentially cylindrical body **3b** equipped at the top, at the end which protrudes from the surface **1a** of the fixed plate **1,** with a head **3a** having greater width, preferably it also having essentially cylindrical development and having larger diameter.

Due to the undercut between the larger portion **10b** of the groove **10** and the narrower portion **10a,** once the hooking pins **3** have been inserted into said groove by means of insertion from the outer opening **10d** which overlooks outward from one of the sides of said movable plate **8,** the pins may no longer be removed from the housing **10** unless the movable plate is slid in transversal direction **y** again.

The fact of providing two hooking pins **3** on the fixed plate **1** which are on-axis to each other along the transversal sliding direction **y** of the movable plate **8,** allows both the hooking of the movable plate, once the connection is closed, and the centring of the two plates, to be simultaneously obtained, and hence the centring of the pair of couplings supported thereby.

Indeed, since the hooking pins **3** are simultaneously engaged within the groove **10,** rotation movements are prevented of the movable plate **8** with respect to the fixed plate **9,** and hence the correct alignment is ensured of the couplings during connection step.

Thus, the pins **3** and the groove **10** consist of centring and hooking means.

As mentioned, by sliding the movable part **B** on the fixed plate **A** in transversal direction y, the heads **3a** of the hooking pins are engaged within the T-groove **10.** Since said groove **10** has a shorter length than the transversal length of the movable plate **8,** when this is slid on the fixed plate **1** a mechanical stop is created between the end-of-travel position **10c** of the groove and one of the two hooking pins **3** which, in conjunction with the fact that the related rotations are prevented of the two parts due to the two axially aligned pins, ensures the correct centring of the male couplings with the female couplings.

The operation of the multi-connection device according to the present invention is therefore the following.

Due to the hooking pins **3** which are inserted into the groove **10** of the movable plate **8,** the centring is obtained of the male and female couplings by means of an insertion movement of the pins into the guide until reaching the bottom **10c** of the guide itself.

Once the correct centring of the plates is obtained, the eccentric profile of the lever **7** tends to near the movable part **B** to the fixed part **A** when the lever is rotated clockwise, with reference to the view in figures 5A and 5B.

As mentioned, the command lever **7** is moveable between a first position shown in figure 5A in which the hooking pins **3** protrude for a sizeable portion of the length thereof from the top surface **1a** of said plate **1,** this position corresponding to an open position of the connections, i.e. of releasing of the moveable part **B** of the connection, and a second position shown in figure 5B in which only the top end, opposite to the bottom end inserted into said restraining blocks 4G, of the hooking pins **3** protrudes from the top surface **1a** of said plate **1.** This second position of the lever 7 corresponds to a closed condition of the connection.

Indeed, when the lever is rotated clockwise, the eccentric profile, with respect to the rotation axis **C,** of the end **7a** of the lever determines the translating axial movement of the hooking means **3** with respect to the fixed plate **1.** In particular such a movement determines a nearing of the head **3a** of the hooking pins **3** to the top surface **1a** of the fixed plate 1. This results in a nearing, when said pins are inserted into the groove **10** of the second movable plate **8,** of the movable plate **8** to the fixed plate **1,** with consequential closing of the connection and connection of the male and female couplings.

As possible embodiment variant, the multi-connection device according to the present invention may advantageously have the elements hereto described for the movable plate, for example, on the fixed plate, and vice versa.

For example, the command lever **7,** the hooking pins **3** and all the elements useful for connecting the two plates which have been hereto disclosed and in the accompanying figures as provided on the fixed part of the device, may instead be conveniently provided on the movable part, and for the purpose the fixed part may instead provide said groove **10.**

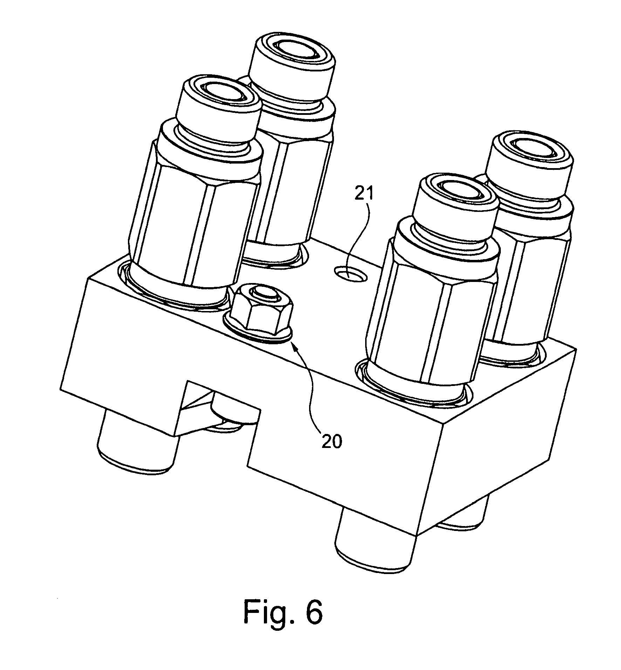

Again, in order to make the multi-connection device according to the present invention also symmetrical, and hence provide the user with the opportunity of managing the positioning of the two plates according to the movements most convenient to him/herself, the groove **10** provided on one of the two plates, in the examples hereto illustrated with reference to figures from 1 to 5c, in particular provided on the movable plate **8,** may advantageously run the entire width of the plate rather than have an end-of-travel position **10c** end. If the groove is straight and involves the entire width of the plate, as shown in figures from 6 to 9, the end-of-travel position for the pins **3** may advantageously consist of a screw with nut **20.** Thereby the limit switch shall be of removable type, and may be indifferently positioned, again in reference to figure 6, in one of the two holes **21** specifically provided at the opposite ends of the groove.

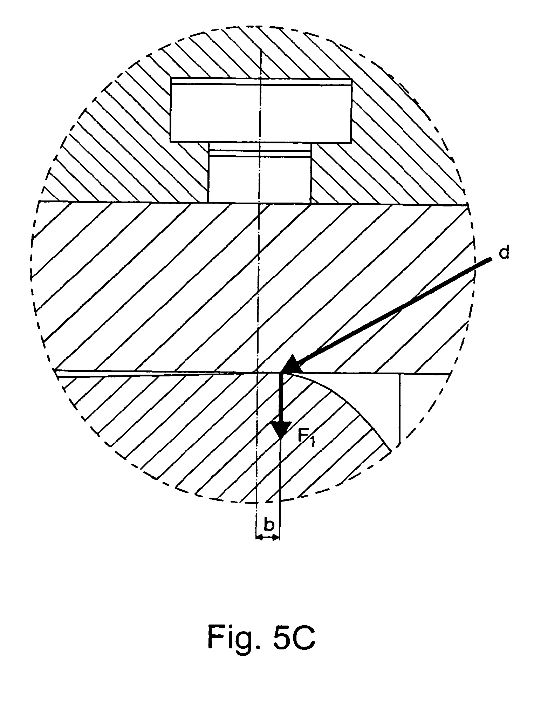

Once the connection has been made it is noted how the contact point between the lever **7** and the fixed plate **1** is moved with respect to the vertical axis of the hooking pins **3.** This is in particular shown in the enlargement in figure 5C, which shows the enlarged view of the detail shown with the circle **A** in figure 5B.

Due to this contrivance which provides unaligning the application point **d** of the force which acts on the lever with respect to the axis of the hooking means **3,** the result is obtained that the force **F1** which acts on the lever, with respect to the centre of rotation thereof, has an arm **b,** which creates a momentum which tends to rotate the lever clockwise again. Due to the pressure in the hydraulic lines, the thrust action which tends to separate the plates from each other, therefore originates a force on the lever which creates a momentum which tends to rotate the lever itself in the closed direction of the connection. Therefore the connection system is equipped with an anti-release system when the couplings are pressurized which prevents the accidental, unwanted opening of the connection when the couplings are pressurized.

Again, the alternative embodiment shown in figures from 6 to 9, also shows a further contrivance, which could naturally also be provided on the first embodiment illustrated in figures from 1 to 5.

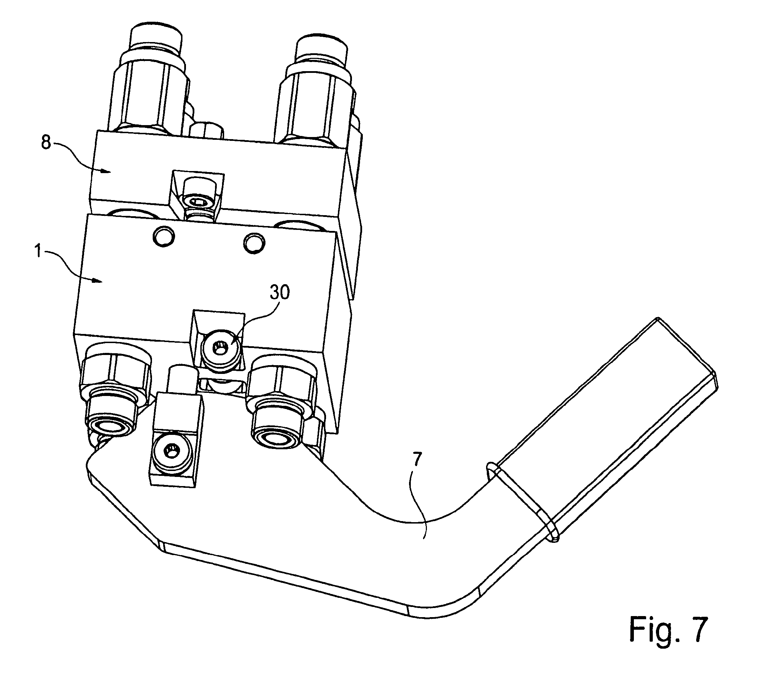

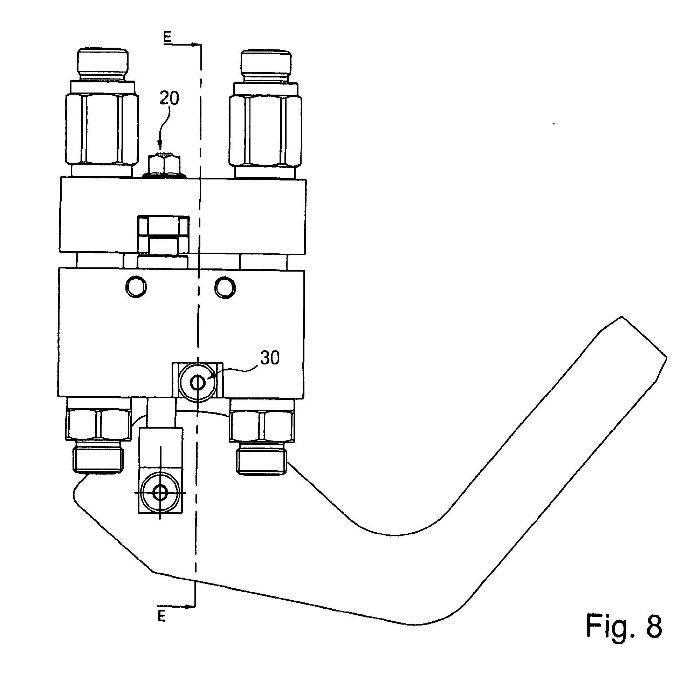

Such a contrivance relates to the fact of providing the insertion of a small idly rotating roller **30,** positioned at the point in which the command lever **7** contacts the bottom portion of the plate to which it is hinged, below the fixed plate **1** in the example in figures 7 and 8.

The rotating element **30** allows the friction to be reduced between the lever and the bottom part of the plate, so as to facilitate the sliding of the lever itself on the plate. Due to this contrivance the wear is prevented of the bottom of the plate due to the dragging of the lever during the opening and/or closing operations of the connection.

The rotating element **30** is particularly recommended for multi-connection devices of larger sizes, in which connecting and disconnecting efforts are also consequently increased.

It has thus been shown how the multi-connection device according to the present invention achieves the object and the purposes proposed.

In particular, it has been shown how the multi-connection device according to the present invention allows a plurality of hydraulic and/or electric lines to be simultaneously connected with an essential structure, simplified with respect to the systems of known type and thus characterized by increased production simplicity and, consequently, by lower production costs and by increased reliability.

Moreover, it has been shown how the multi-connection device according to the present invention has the advantage of embodying, within a single system, the hooking means, the centring means and the safety means adapted to prevent the unwanted disconnection when pressurized fluid is in the hydraulic lines.

Not lastly, it has been shown how the multi-connection device according to the present invention does not have any protruding parts which could interfere with the operation of the machine or of the apparatus on which said device is mounted, and in particular said safety means do not have parts protruding from the connection plates.

Several modifications may be made by the person skilled in the art without departing from the scope of protection of the present invention.

## Claims

1. A multi-connection device for simultaneously connecting several hydraulic and/or electric lines of the type comprising a fixed part comprising a plurality of first couplings and a movable part comprising a plurality of second couplings suitable for being connected to said first couplings, comprising centring and hooking means (3, 10) adapted to simultaneously centre and hook the movable part (B) with respect to said fixed part (A), said centring and hooking means (3, 10) being activated by the rotation of a command lever (7) having eccentric profile, movable between a first position corresponding to a condition of disconnection of the couplings and of releasing possibility of the movable part (B) from the fixed part (A), and a second position corresponding to a condition of connection of the couplings and stable closing of the connection, said fixed part (A) further comprising at least a first plate-like element (1) which supports said plurality of first couplings (2a, 2b, 2c, 2d) and in that said movable part (B) comprises at least a second plate-like element (8) which supports a plurality of second couplings (9a, 9b, 9c, 9d) suitable for being connected to said first couplings (2a, 2b, 2c, 2d), **characterized in that** said centring and hooking means (3, 10) comprise at least a pair of pins (3) inserted into specific housings conveniently provided in said first plate-like element (1) and movable with respect thereto in, essentially, direction orthogonal to the top face (1a) of said plate-like element (1) and **in that** said centring and hooking means (3, 10) also comprise, on said second plate-like element (8), a groove (10) at the bottom surface (8a) of said second plate-like element (8) having profile suitable for housing said hooking pins (3) and having an opening (10d) at one of the side surfaces of said second plate-like element (8) for inserting said pins (3), said groove (10) also having a bottom longitudinal development at the width of the plate-like element (8) such as to have an open end (10d) and the opposite closed end (10c) which acts as limit switch for said hooking pins (3).

2. A multi-connection device according to claim 1, **characterized in that** said pins (3) have an essentially cylindrical body (3b) equipped, at the end which protrudes from the surface (1 a) of the plate-like element (1), with a head (3a) having greater essentially cylindrical development with respect to the body (3b).

3. A multi-connection device according to the preceding claim, **characterized in that** said hooking pins (3) are restrained to restraining elements (4) at the opposite end with respect to the end wherein said head (3a) is provided.

4. A multi-connection device according to claim 1, **characterized in that** said groove (10) crosses said plate-like element (8) for the entire length thereof, and **in that** a pair of holes (21) is provided at the opposite ends of said groove (10), each of said holes being capable of housing a screw plus nut system (20) which acts as end-of-travel position for said hooking pins (3).

5. A multi-connection device according one or more of the preceding claims, **characterized in that** said groove (10) has a T-shaped profile wherein the bottom part (10a) which opens on the inner surface (8a) of the second plate-like element (8) has a smaller width and suitable for housing the body (3b) of said pins (3) and the part (10b) most within the plate has a greater width, suitable for housing the head (3a) of said pins (3).

6. A multi-connection device according to one or more of the preceding claims, **characterized in that** said command lever (7) having eccentric profile is hinged on a pin (5) which holds said pins (3) to said restraining elements (4) and is inserted into intermediate position between said restraining elements (4).

7. A multi-connection device according to one or more of the preceding claims, **characterized in that** when said command lever (7) having eccentric profile is in the second position corresponding to the closed condition of the connection, it contacts the bottom portion of said first plate-like element (1) at a point (d) not between a vertical plane (yz) passing through the centre of rotation (C) of said lever (7).

8. A multi-connection device according to the preceding claim, **characterized in that** said point (d) is positioned at an orthogonal distance (b) from said vertical plane (yz) passing through the centre of rotation (C) of said lever (7) so that the reaction force (F1) which acts on the lever (7) at said point of contact (d) creates, with respect to said centre of rotation (C), a momentum which opposes the movement of said lever (7) from said second position corresponding to the closed condition of the connection.

9. A multi-connection device according to one or more of the preceding claims, **characterized in that** it further comprises a rotating element (30) interposed at the dragging point of the lever (7) on the bottom surface of the plate to which said lever is hinged.

10. A multi-connection device according to one or more of the preceding claims, **characterized in that** said rotating element (30) consists of a small cylindrical roller free to idly rotate due to the action of the lever (7).

## Patentansprüche

1. Mehrfach angeschlossene Vorrichtung zum gleichzeitigen Anschließen mehrerer Hydraulik- und/oder Stromleitungen in der Ausführung, die ein festes Teil, das mehrere erste Kupplungen umfasst, sowie ein bewegliches Teil umfasst, das mehrere zweite Kupplungen umfasst, die so ausgebildet sind, dass sie mit den ersten Kupplungen verbunden werden können, und die Zentrier- und Einhakmittel (3, 10) umfassen, die so ausgebildet sind, dass das bewegliche Teil (B) im Verhältnis zum festen Teil (A) gleichzeitig zentriert und eingehakt werden kann, wobei die Zentrier- und Einhakmittel (3, 10) durch die Drehung eines Steuerhebels (7) aktiviert werden können, der ein exzentrisches Profil hat und zwischen einer ersten Position, die einem Zustand des Nichtanschlusses der Kupplungen und der Freigabemöglichkeit des beweglichen Teils (B) vom festen Teil (A) entspricht, und einer zweiten Position, die einem Zustand des Anschlusses der Kupplungen und des stabilen Schließens des Anschlusses entspricht, bewegbar ist, wobei das feste Teil (A) weiterhin mindestens ein erstes plattenartiges Element (1) umfasst, das die mehreren ersten Kupplungen (2a, 2b, 2c, 2d) abstützt, und wobei das bewegliche Teil (B) mindestens ein zweites plattenartiges Element (8) umfasst, das mehrere der zweiten Kupplungen (9a, 9b, 9c, 9d) abstützt, die so ausgebildet sind, dass sie mit den ersten Kupplungen (2a, 2b, 2c, 2d) verbunden werden können, **dadurch gekennzeichnet, dass** die Zentrier- und Einhakmittel (3, 10) mindestens ein Paar Stifte (3) umfassen, die in speziellen Gehäusen sitzen, die in geeigneter Weise im ersten plattenartigen Element (1) vorgesehen und im Verhältnis dazu im Wesentlichen in einer Richtung bewegbar sind, die orthogonal zur Oberseite (1a) des plattenartigen Elements (1) verläuft, und dass die Zentrier- und Einhakmittel (3, 10) am zweiten plattenartigen Element (8) auch eine Nut (10) an der Unterseite (8a) des zweiten plattenartigen Elements (8) mit einem Profil, das so ausgebildet ist, dass die Einhakstifte (3) darin aufgenommen werden können, und mit einer Öffnung (10d) an einer der Seitenflächen des zweiten plattenartigen Elements (8) zum Einsetzen der Stifte (3) umfasst, wobei die Nut (10) am Boden auch eine Längsausbildung über die Breite des plattenartigen Elements (8) aufweist, so dass sich ein offenes Ende (10d) und das gegenüberliegende geschlossene Ende (10c) ergeben, das als Endschalter für die Einhakstifte (3) dient.

2. Mehrfach angeschlossene Vorrichtung nach Anspruch 1, **dadurch gekennzeichnet, dass** die Stifte (3) einen im Wesentlichen zylindrischen Körper (3b) haben, der an dem Ende, das aus der Fläche (1a) des plattenartigen Elements (1) herausragt, mit einem Kopf (3a) ausgestattet ist, der im Verhältnis zum Körper (3b) eine größere, im Wesentlichen zylindrische Ausbildung aufweist.

3. Mehrfach angeschlossene Vorrichtung nach dem vorstehend aufgeführten Anspruch, **dadurch gekennzeichnet, dass** die Einhakstifte (3) an den Rückhalteelementen (4) am gegenüberliegenden Ende im Verhältnis zu dem Ende, in dem der Kopf (3a) vorgesehen ist, zurückgehalten werden.

4. Mehrfach angeschlossene Vorrichtung nach Anspruch 1, **dadurch gekennzeichnet, dass** die Nut (10) quer zur gesamten Länge des plattenartigen Elements (8) verläuft, und dass ein Paar Löcher (21) an den gegenüberliegenden Enden der Nut (10) vorgesehen sind, wobei jedes der Löcher ein eine Schraube und eine Mutter umfassendes System (20) aufnehmen kann, das als eine Endlagenposition für die Einhakstifte (3) dient.

5. Mehrfach angeschlossene Vorrichtung nach einem oder mehreren der vorstehend aufgeführten Ansprüche, **dadurch gekennzeichnet, dass** die Nut (10) ein T-förmiges Profil besitzt, wobei der untere Teil (10a), der sich an der Innenfläche (8a) des zweiten plattenartigen Elements (8) öffnet, eine geringere Breite hat und so ausgebildet ist, dass er den Körper (3b) der Stifte (3) aufnehmen kann, und wobei der zum größten Teil innerhalb der Platte befindliche Teil (10b) eine größere Breite hat, so dass der Kopf (3a) der Stifte (3) darin aufgenommen werden kann.

6. Mehrfach angeschlossene Vorrichtung nach einem oder mehreren der vorstehend aufgeführten Ansprüche, **dadurch gekennzeichnet, dass** der Steuerhebel (7) mit exzentrischem Profil an einem Stift (5) angelenkt ist, der die Stifte (3) an den Rückhalteelementen (4) hält, und der in einer Zwischenposition zwischen den Rückhalteelementen (4) eingesetzt ist.

7. Mehrfach angeschlossene Vorrichtung nach einem oder mehreren der vorstehend aufgeführten Ansprüche, **dadurch gekennzeichnet, dass**, wenn der Steuerhebel (7) mit exzentrischem Profil in der zweiten Position ist, die dem geschlossenen Zustand des Anschlusses entspricht, dieser den Bodenabschnitt des ersten plattenartigen Elements (1) an einem Punkt (d) berührt, der nicht zwischen einer vertikalen Ebene (yz) liegt, die durch das Drehzentrum (C) des Hebels (7) verläuft.

8. Mehrfach angeschlossene Vorrichtung nach dem vorstehend aufgeführten Anspruch, **dadurch gekennzeichnet, dass** der Punkt (d) in einer orthogonalen Distanz (b) von der durch das Drehzentrum (C) des Hebels (7) verlaufenden vertikalen Ebene (yz) positioniert ist, so dass die Reaktionskraft (F1), die am Kontaktpunkt (d) auf den Hebel (7) einwirkt, im Verhältnis zum Drehzentrum (C) ein Momentum bewirkt, das der Bewegung des Hebels (7) aus der zweiten Position, die dem geschlossenen Zustand des Anschlusses entspricht, entgegenwirkt.

9. Mehrfach angeschlossene Vorrichtung nach einem oder mehreren der vorstehend aufgeführten Ansprüche, **dadurch gekennzeichnet, dass** sie weiterhin ein rotierendes Element (30) umfasst, das am Anschlagpunkt des Hebels (7) an der Bodenfläche der Platte, an der der Hebel angelenkt ist, zwischengeschaltet ist.

10. Mehrfach angeschlossene Vorrichtung nach einem oder mehreren der vorstehend aufgeführten Ansprüche, **dadurch gekennzeichnet, dass** das rotierende Element (30) aus einer kleinen zylindrischen Rolle besteht, die sich aufgrund der Wirkung des Hebels (7) frei drehen kann.

## Revendications

1. Dispositif à multi-connexions pour connecter simultanément plusieurs circuits hydrauliques et/ou électriques du type comprenant une partie fixe comprenant une pluralité de premiers couplages et une partie mobile comprenant une pluralité de seconds couplages appropriés pour être connectés auxdits premiers couplages, comprenant des moyens de centrage et de crochetage (3, 10) adaptés pour centrer et crocheter simultanément la partie mobile (B) par rapport à ladite partie fixe (A), lesdits moyens de centrage et de crochetage (3, 10) étant activés par la rotation d'un levier de commande (7) ayant un profil excentrique, mobile entre une première position correspondant à une condition de déconnexion des couplages et de possibilité de libération de la partie mobile (B) de la partie fixe (A), et une seconde position correspondant à une condition de connexion des couplages et la fermeture stable de la connexion, ladite partie fixe (A) comprenant en outre au moins un premier élément en forme de plaque (1) qui supporte ladite pluralité de premiers couplages (2a, 2b, 2c, 2d) et en ce que ladite partie mobile (B) comprend au moins un second élément en forme de plaque (8) qui supporte une pluralité de seconds couplages (9a, 9b, 9c, 9d) appropriés pour être connectés auxdits premiers couplages (2a, 2b, 2c, 2d), **caractérisé en ce que** lesdits moyens de centrage et de crochetage (3, 10) comprennent au moins une paire de broches (3) insérées dans des logements spécifiques prévus de manière appropriée dans ledit premier élément en forme de plaque (1) et mobiles par rapport à ce dernier, essentiellement dans une direction orthogonale à la face supérieure (1a) dudit élément en forme de plaque (1) et **en ce que** lesdits moyens de centrage et de crochetage (3, 10) comprennent également, sur ledit second élément en forme de plaque (8), une rainure (10) au niveau de la surface inférieure (8a) dudit second élément en forme de plaque (8) ayant un profil approprié pour loger lesdites broches de crochetage (3) et ayant une ouverture (10d) au niveau de l'une des surfaces latérales dudit second élément en forme de plaque (8) pour insérer lesdites broches (3), ladite rainure (10) ayant également un développement longitudinal inférieur au niveau de la largeur de l'élément en forme de plaque (8) afin d'avoir une extrémité ouverte (10d) et l'extrémité fermée (10c) opposée qui sert de commutateur de fin de course pour lesdites broches de crochetage (3).

2. Dispositif à multi-connexions selon la revendication 1, **caractérisé en ce que** lesdites broches (3) ont un corps (3b) essentiellement cylindrique équipé, à l'extrémité qui fait saillie de la surface (1a) de l'élément en forme de plaque (1), avec une tête (3a) ayant un meilleur développement essentiellement cylindrique par rapport au corps (3b).

3. Dispositif à multi-connexions selon la revendication précédente, **caractérisé en ce que** lesdites broches de crochetage (3) sont retenues pour retenir des éléments (4) à l'extrémité opposée par rapport à l'extrémité où ladite tête (3a) est prévue.

4. Dispositif à multi-connexions selon la revendication 1, **caractérisé en ce que** ladite rainure (10) traverse ledit élément en forme de plaque (8) sur toute sa longueur, et **en ce qu'**une paire de trous (21) est prévue au niveau des extrémités opposées de ladite rainure (10), chacun desdits trous étant capable de loger un système de vis plus écrou (20) qui sert de position de fin de course pour lesdites broches de crochetage (3).

5. Dispositif à multi-connexions selon une ou plusieurs des revendications précédentes, **caractérisé en ce que** ladite rainure (10) a un profil en forme de T, dans lequel la partie inférieure (10a) qui s'ouvre sur la surface interne (8a) du second élément en forme de plaque (8) a une plus petite largeur et est appropriée pour loger le corps (3b) desdites broches (3) et la partie (10b) située le plus à l'intérieur de la plaque a une plus grande largeur, appropriée pour loger la tête (3a) desdites broches (3).

6. Dispositif à multi-connexions selon une ou plusieurs des revendications précédentes, **caractérisé en ce que** ledit levier de commande (7) ayant un profil excentrique est articulé sur une broche (5) qui maintient lesdites broches (3) sur lesdits éléments de retenue (4) et est inséré en position intermédiaire entre lesdits éléments de retenue (4).

7. Dispositif à multi-connexions selon une ou plusieurs des revendications précédentes, **caractérisé en ce que** lorsque ledit levier de commande (7) ayant un profil excentrique est dans la seconde position correspondant à la condition fermée de la connexion, il est en contact avec la partie inférieure dudit premier élément en forme de plaque (1) au niveau d'un point (d) qui n'est pas entre un plan vertical (yz) passant par le centre de rotation (C) dudit levier (7).

8. Dispositif à multi-connexions selon la revendication précédente, **caractérisé en ce que** ledit point (d) est positionné à une distance orthogonale (b) dudit plan vertical (yz) passant par le centre de rotation (C) dudit levier (7) de sorte que la force de réaction (F1) qui agit sur le levier (7) au niveau dudit point de contact (d) crée, par rapport audit centre de rotation (C), un moment qui s'oppose au mouvement dudit levier (7) de ladite seconde position correspondant à la condition fermée de la connexion.

9. Dispositif à multi-connexions selon une ou plusieurs des revendications précédentes, **caractérisé en ce qu'**il comprend en outre un élément rotatif (30) intercalé au niveau du point de traînée du levier (7) sur la surface inférieure de la plaque par rapport à laquelle ledit levier est articulé.

10. Dispositif à multi-connexions selon une ou plusieurs des revendications précédentes, **caractérisé en ce que** ledit élément rotatif (30) se compose d'un petit rouleau cylindrique libre de tourner sans réaction, en raison de l'action du levier (7).
